# EUROPEAN PATENT APPLICATION

(11) **EP 2 985 265 A1**
(43) Date of publication of application: **17.02.2016**
(21) Application number: 13877564.8
(22) Date of filing: 11.03.2013
(51) Int. Cl.: C02F 3/28

(54) **WASTEWATER TREATMENT METHOD**

(71) Applicant: Euroestudios S.L., 28006 Madrid (ES); Fundacion Imdea Agua, 28805 Madrid (ES); Fundación Centro de Las Nuevas Tecnologías del Agua, 41820 Carrión de los Céspedes (Sevilla) (ES)
(72) Inventor: ESTEVE NUÑEZ, Abraham, E-28805 Alcalá de Henares (Madrid) (ES); BERNÁ GALIANO, Antonio, E-28805 Alcalá de Henares (Madrid) (ES); REIJA MAQUEDA, Alejandro, E-28805 Alcalá de Henares (Madrid) (ES); SALAS RODRÍGUEZ, Juan José, E-41820 Carrión de los Céspedes (Sevilla) (ES); PIDRE BOCARDO, Juan Ramón, E-41820 Carrión de los Céspedes (Sevilla) (ES); ARAGÓN CRUZ, Carlos Alberto, E-41820 Carrión de los Céspedes (Sevilla) (ES)
(74) Representative: Elzaburu S.L.P.
(86) International application number: PCT/ES2013/070153
(87) International publication number: WO 2014/140387

(57) **Abstract**

The invention relates to a wastewater treatment method comprising: filling a container of a treatment device with a biocompatible bed of electrically conductive inert material; supplying a flow of wastewater, which flows into the container filled with the conductive biocompatible bed; and leaving the wastewater inside the container for a sufficient amount of time so that the electrons that are produced in the oxidation reactions of material transported by the wastewater are transferred to molecules also transported in the same wastewater through the conductive biocompatible bed.

## Description

### PURPOSE OF THE INVENTION

The present invention refers to a method for treating wastewater.

### TECHNICAL STATE-OF-THE-ART

The use of natural purification systems for wastewater treatment is well known, as water has an intrinsic self-purification capacity, in other words, the ability to eliminate or reduce the concentration of pollutants by physical/chemical and biological means.

The aforesaid process occurs at slow rate, so thus wastewater treatment systems are required to speed up the self-purification treatment, such as biological filters whereby the waste water flows through a bed of inert material.

The biological filter comprises a recipient container filled with a bed of inert material, usually plastic and of variable geometry, through which the flow of water to be treated is passed, completely flooding the container, which acts as a biological reactor where a biofilm of microorganisms responsible for the biological treatment is developed, which purifies the wastewater by oxidising the organic matter in the water. The filter is usually equipped with an air stream to supply the oxygen needed to support biological water purification.

The oxygen serves to consume the electrons generated in the biological oxidation of organic matter in the water. The air supply represents an additional cost in water treatment, while generating a large amount of biomass or sludge due to the high cellular performance of aerobic microbial metabolisms. If the biofilter is operated under anaerobic conditions, i.e. without additional oxygen, it is possible to reduce the production of biomass, although the purification rate is slowed down due to lack of electron acceptors to consume the electrons generated in the oxidation of organic matter.

### SUMMARY

The present invention seeks to overcome one or more of the aforementioned drawbacks by means of a wastewater treatment method as expressed in the claims.

The aim of one embodiment is to provide a wastewater treatment device comprising a refillable container with a bed of biocompatible electrically conductive inert material, which will be the final acceptor of electrons or negative electric charges produced in redox reactions. This biocompatible conductive bed favours the biological processes involved in removal of oxidisable material, i.e. organic material or any biodegradable waste such as urban wastewater, industrial effluent, vegetable residues, etc.

Another aim of the embodiment is to provide a wastewater treatment device with greater capacity for sewage treatment by oxidation reactions, thus improving performance while cutting down the need for space and improving the nitrification of ammonium by oxidation with a view to the reuse of effluent waters, to ensure that they comply with the regulations currently in force.

Another aspect of the embodiment consists of providing a bed of inert biocompatible electrically conductive material which is integrated into the electron transport chain, where the final acceptor of the electrons is usually an inorganic molecule. The biocompatible bed can be granulated into particles of variable or uniform grain size to provide a conductive outer surface to form part of the electron transport chain.

In consequence, the biocompatible conductive bed favours oxidation reactions, boosting the capacity of the microorganisms to transfer the electrons generated during the oxidation processes to the surface of the bed, and from the bed surface to the final electron acceptor, which is generally an inorganic molecule.

Yet another aspect of the embodiment consists of providing a biocompatible bed of inert electrically conductive material, comprising an electron non-conductive core coated with an electron-conducting material.

The biocompatible conductor bed is graphite or coke type, or similar.

A further objective of the embodiment is to provide a simple procedure for the treatment of polluted water currents with nitrogen compounds dissolved through bacterial action, which transforms these compounds into gaseous nitrogen.

In consequence, the treatment device consists of a container filled with a bed of biocompatible conductive inert material which is also an electron carrier, which purifies wastewater using an anaerobic biological process to remove polluting substances, such as nitrogen compounds.

Another objective of the embodiment is to provide a wastewater treatment device for water treatments at atmospheric pressure and room temperature, minimising the production of sludge or biomass, without the artificial supply of oxygen to the treatment device.

A further aim of the embodiment concerns the application of this concept in the construction of artificial wetlands that favour oxidation and purification of the material transported by the wastewaters, minimising the production of slurry or biomass and thereby reducing the phenomena of filter substrate clogging.

### BRIEF DESCRIPTION OF THE FIGURES

A more detailed explanation of the invention is provided in the description below and is based on the attached figures:
Figure 1 shows how the wastewater is purified when passing through a biocompatible conductive bed; and
figure 2 shows a detail of the microbial purification process; i.e. oxidation of organic matter and ammonium coupled to the reduction acceptor through the biocompatible conductive bed.

### DESCRIPTION OF AN EMBODIMENT

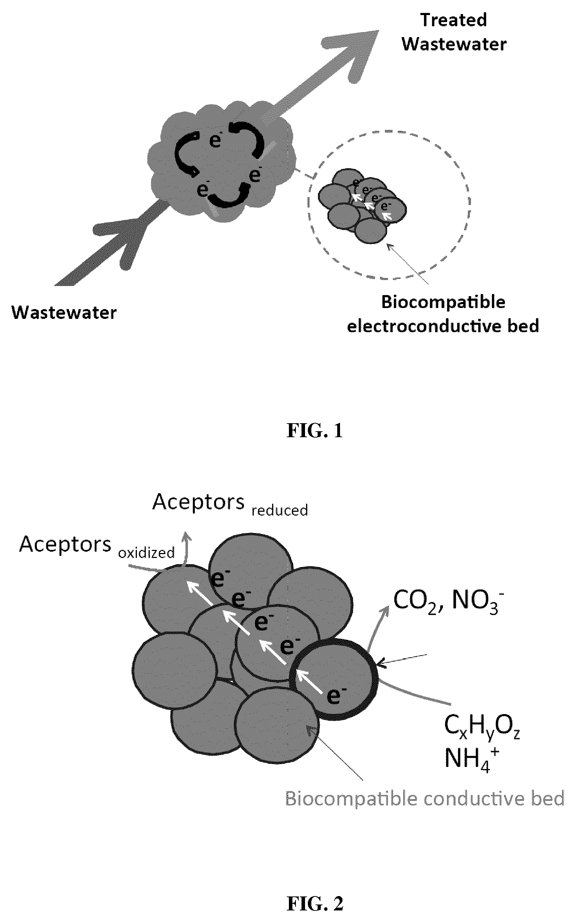

In relation to figures 1 and 2, a wastewater treatment device comprising a totally or partially filled recipient container with a bed of biocompatible electrically conductive inert material, an inlet that supplies a flow of water to be treated which totally or partially floods the recipient container, in such a way that the biocompatible bed acts as a biological reactor and an outlet for the purified water.

The biocompatible bed is a conductive hydrophilic material such as graphite or coke, etc., supplied in the form of particles or grains which may be of varying or uniform particle sizes. The biocompatible bed constitutes a substrate where a biofilm of microorganisms responsible for the anaerobic purification treatment of wastewater develops.

The biocompatible bed is adapted to encourage the growth of this biofilm of microorganisms over the conductive outer surface. This surface forms part of the transport chain of the electrons generated in the microbial oxidation processes of the materials carried by the wastewater that floods the biocompatible bed.

The biocompatible bed is adapted to transfer the electrons generated during oxidation reactions to final acceptors, generally an inorganic molecule such as SO₄²⁻, NO₂⁻, NO₃⁻ or CO₂, etc.

Consequently, the oxidation reactions of the oxidisable matter, i.e. organic material or biodegradable waste such as urban wastewater, industrial effluents, vegetable residues etc., in the absence of oxygen, generate electrons that are transferred to inorganic molecules through the outer conductive surface of the biocompatible bed.

The fact that the biocompatible bed is waterlogged means that the oxygen is consumed on the surface of the bed, and therefore cannot participate in the oxidation processes inside the treatment device or biological reactor. Consequently, the bed is anaerobic.

The biocompatible particles inside the biological reactor supply a conductive area other that favours the oxidation processes of the material transported by the sewage water, initially encouraging the transfer of electrons released during the oxidation process to the biocompatible bed and, subsequently, to inorganic molecules.

Both the biological reactor and the size of the particles in the biocompatible bed are designed in terms of their size and the flow speeds of water through the reactor, in such a way that the time that the water remains around the biocompatible particles will be sufficient to favour oxidation reactions and, therefore, so that the transfer of electrons is completed substantially to inorganic molecules, ensuring that all the wastewater is treated.

In consequence, increasing the outer conductive surface of the biocompatible bed results in an increased capacity to transfer the electrons generated during the processes of oxidation to inorganic molecules, through the granulate biocompatible bed, and therefore enhances the purification capacity of the wastewater treatment device and minimises the production of slurry.

One application of this waste water treatment technology is the construction of artificial wetlands.

For example, removing nitrogen compounds whatever the predominant form of nitrogen in water, ammonium or nitrate, requires the addition of electrons to convert the nitrogen compounds to gaseous nitrogen, N₂.

Thus, the electrons necessary to remove nitrogen pollution are supplied by the oxidation reactions through the biocompatible granular bed. Consequently, an important parameter to determine wastewater treatment capacity is the numerical value of the outer conductive surface provided by the biodegradable granular bed, in other words, the greater the conductive surface, the higher the electron transfer capacity of the biocompatible granular bed and, therefore, the higher the wastewater treatment capacity of the treatment device, biological reactor, or artificial wetlands.

## Claims

1. **A wastewater treatment method characterised by** the procedure comprising the following stages:
• Filling a recipient container of a treatment device with a biocompatible bed of electrically conductive inert material,
• Providing a wastewater flow to flood the recipient container filled with the biocompatible bed of electrically conductive inert material,
• Permanence of the wastewater in the recipient container to transfer the electrons produced in oxidation reactions of the material transported by the wastewater to molecules also transported in the same wastewater, through the biocompatible bed of electrically conductive inert material.

2. **Method** in accordance with claim 1; wherein the method further comprises the step of granulating the biocompatible bed of electrically conductive inert material into grains, particles, of regular or irregular size.

3. **Method** in accordance with claim 1; wherein the method comprises electron transfer from the outer conductive surface of the particles of the biocompatible bed of electrically conductive inert material to nitrogen compounds carried by the wastewater.

4. **Method** in accordance with claim 2; wherein the nitrogenous compounds transported by the wastewater are ammonium, nitrite or nitrate types.

5. **A biocompatible bed** of filling for a wastewater treatment device which receives a wastewater flow; wherein the biocompatible bed type is a biocompatible bed of electrically conductive material.

6. **Biocompatible bed** in accordance with claim 5; wherein the biocompatible bed is granulated into grains or particles of regular or irregular size.

7. **Biocompatible bed** in accordance with claim 6; wherein the biocompatible bed comprises a core coated with an outer electron conducting substance.

8. **Biocompatible bed** in accordance with claim 5 or 6; wherein the biocompatible bed is graphite or coke type.

9. Use of a biocompatible bed in accordance with any of the claims from 5 to 8; wherein the biocompatible bed is adapted to be poured into a container vessel of a wastewater treatment device where the biocompatible bed can be flooded by a wastewater flow.
